# EUROPEAN PATENT APPLICATION

(11) **EP 2 172 787 A1**
(43) Date of publication of application: **07.04.2010**
(21) Application number: 09011155.0
(22) Date of filing: 31.08.2009
(51) Int. Cl.: G01S 7/292, G01S 7/487, G01S 13/08, G01S 17/08

(54) **Device and method for detecting a target using a high speed sampling device**

(30) Priority: 03.10.2008 US 286932
(71) Applicant: ROSEMOUNT AEROSPACE INC., Burnsville, MN 55306-4898 (US)
(72) Inventor: Langfield, Jason D., Bloomington Minnesota 55420 (US)
(74) Representative: Schmitz, Hans-Werner

(57) **Abstract**

Devices and methods for detecting a target using a logic circuit for increasing the accuracy and speed at which targets can be detected in security and surveillance applications. A commercially available field programmable gate array may be used as the logic device. In one embodiment, the Multigigabit Transfer port (MGT) of the field programmable gate array is locked to an external clock. The coupling of the MGT port to an external clock increases the rate at which the received signal is sampled, without having to use the device in the oversampling mode. By doing so, the field programmable gate array is able to sample at least eight times faster than the actual transfer rate, which increases the speed and accuracy by which a target can be detected.

## Description

### BACKGROUND OF THE INVENTION

### 1. Field of the Invention

The subject disclosure relates to devices, systems and methods for detecting a target. More particularly, the subject disclosure relates to using a programmable logic circuit for increasing the accuracy and speed at which targets can be detected in security and surveillance applications.

### 2. Description of the Related Art

Methods and devices for target detection using analysis of a reflected or echo signal bounced back from a transmitted signal are generally known. These devices typically transmit a series of analog signal pulses, such as a radio frequency, electromagnetic or optical signal pulses at a predetermined pulse width, or signal length measured in time. A receiver then detects a return echo signal which is reflected or bounced back from the target. The received analog signal is typically converted to a digital signal by analog circuitry and then externally digitized. The new digital signal is then analyzed in order to determine various characteristics such as noise, distance, and location of the detected target. These devices can be particularly helpful in military surveillance or other security applications where target detection must be performed covertly.

When a distance from the transmitter to the target is desired, a series of analog signal pulses, such as a laser signal, is first transmitted in a direction of the potential target. If a target is present, the target reflects back the series of analog signal pulses. These analog signal pulses are then converted into a stream of logic signals by means of an analog logic circuit which performs a sampling function. Once the logic signals have been sampled and converted to a digital signal, the distance of a detected target can be measured based on a determination of the time it took for the echo signal to be reflected back to the receiver. This is also known as the pulse transit time. With laser instruments, the intensity of the reflected radiation detected is continuously converted into an electrical voltage by the receiver. The time curve of this received voltage represents a received analog signal also termed a backscatter curve.

Whether the backscatter curve lies above or below the respective threshold value is determined using a threshold circuit which may include one or more comparators. A result of the backscatter curve being above can be evaluated as a logic "1" and below as a logic "0". If the received analog signal is temporarily above the threshold due to a signal pulse which corresponds to a target from which a transmitted radiation pulse was reflected, the threshold circuit therefore generates a logic pulse of "1." A plurality of analog signal pulses of this kind consequently results in a corresponding plurality of digital logic pulses.

A start pulse, defining the starting time of the measurement, usually serves as the reference point in time for the transit time measurement based, for example, on the rising edges of the logic signal pulses. In this process, the rising edge of the logic signal pulse, that is the point in time at which the received analog signal has broken through the threshold, is termed an "event," or the detection of a target. The distance from the target from which the (analog) signal pulse originates can then be calculated using the speed of light and the time difference between the rising edges of the logic starting pulses and of the logic signal pulse.

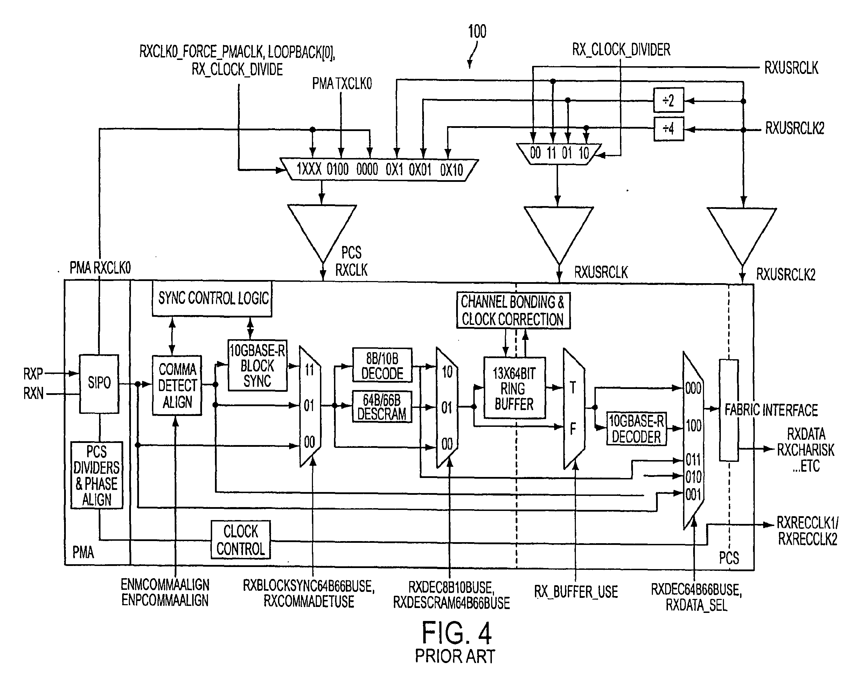

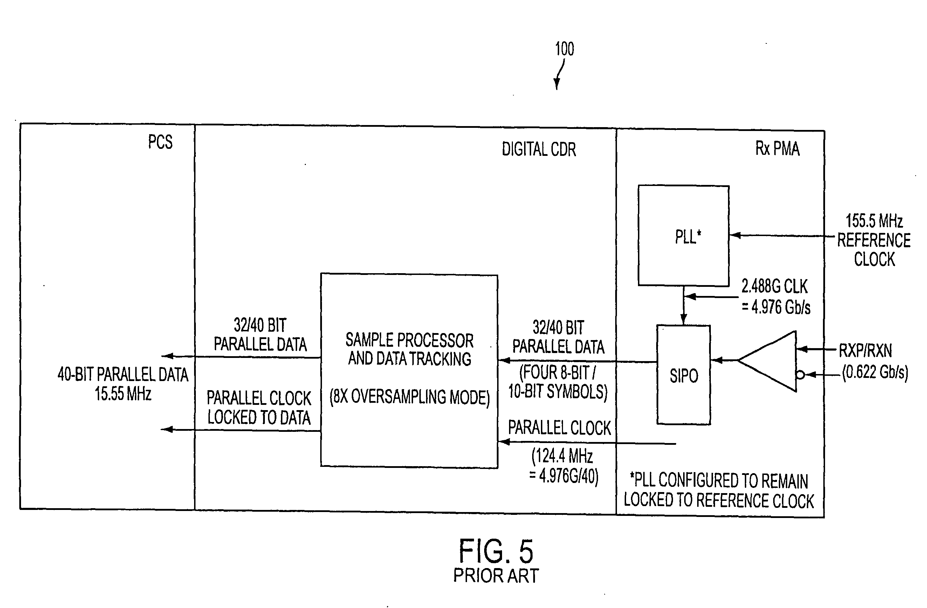

Typically, the falling edges of the logic signal pulses are also measured as events to obtain information on the pulse widths. The speed at which the time measurement of the sampler takes place within the logic circuit is consequently of decisive importance. Often, target detection devices use a field-programmable gate array (FPGA). One FPGA supplier is Xilinx Inc. of San Jose, CA who makes the Xilinx® Virtex-4 model FPGA. Fig. 4 is a prior art schematic of the receiver domains of the Virtex-4 FPGA. Fig. 5 is a prior art example of the operation of the Virtex-4 FPGA digital receiver.

Increasing demands are being made on the measuring sensitivity, the measuring precision and on the measuring speed. While improved devices and methods are desired, there is also a need to keep manufacturing costs of mass-produced units at acceptable levels. Thus, there is a need for devices and methods for increasing the accuracy and speed at which targets can be detected which also optimize production costs.

### SUMMARY OF THE INVENTION

An aspect of the subject disclosure is to provide surveillance devices and methods for increasing the accuracy and speed by which targets can be detected. Preferably, the subject technology increases the sampling speed of the signal reflected from a target using existing low cost logic circuitry.

The subject disclosure provides a high speed serial sampler device for detecting a location of a target. The device comprises a transmitter for transmitting a signal such as a radio frequency or optical signal. The device further comprises a programmable logic circuit having a receiver for detecting a received echo reflected from at least one target. The programmable logic circuit samples the received signal based on an external clock to create a sampled echo. A transition in the sampled received signal indicates a location of a target.

In one embodiment, the programmable logic circuit comprises a field-programmable gate array such as a Virtex-4 model. According to the subject disclosure, the Rocket Input or Output port (Rocket I/O port), also known as the Multigigabit Transfer Port (MGT port), of the field-programmable gate array is locked to the external clock. Using the programmable logic circuit, the device can determine a distance of the target from the transmitter based on the transition in the sampled echo. The device can also be further configured to use a pulse width of the received signal to determine a strength and noise of the received echo. In addition, the programmable logic circuit of the device may use a start pulse of the received echo to determine a distance of the target from the transmitter. The device can achieve a resolution of an input or received echo that is less than or equal to 0.16 ns.

The subject disclosure also provides a device for detecting the location of a target during surveillance. The device comprises a transmitter for broadcasting a signal for requesting information about a location of a target and a programmable logic circuit. The programmable logic circuit may include a receiver for detecting an echo signal reflected from the target; a sampler for oversampling the echo signal at a rate based on an external clock; and a decoder. The decoder receives an oversampled signal from the sampler, decodes the oversampled signal, and outputs a low signal if a target is not detected and a high signal if the target is detected. A location of a target may be determined by a transition from the low signal to the high signal over time.

The device may be characterized such that the programmable logic circuit comprises a field-programmable gate array. The field-programmable gate array comprises a MGT port that is locked to the external clock. The device may determine a distance of the target from the transmitter based on the transition of the low signal to the high signal outputted by the decoder. Similarly, a resolution of an input or echo signal which is less than or equal to 0.16 ns can be achieved.

The subject disclosure also provides a method for detecting a target. The method includes the steps of transmitting a signal at the target; detecting a received signal reflected from the target; sampling the received signal based on an external clock; and detecting a target by determining a transition in the sampled received signal. The received signal may be detected by a field-programmable gate array. The method may further include the step of coupling a Multigigagbit Transfer port of the field-programmable gate array to said external clock. Both the method and devices of the subject disclosure may bypass a portion of the hardware (at least one or more components) used to operate the field-programmable gate array in a normal mode. The method may also include the step of determining a distance of the target from the transmitter based on a start pulse of the sampled received signal.

These and other aspects and advantages of the subject invention will become more readily apparent from the following description of the preferred embodiments taken in conjunction with the drawings.

### BRIEF DESCRIPTION OF THE DRAWINGS

So that those skilled in the art to which the subject invention appertains will readily understand how to make and use the method and device of the subject invention without undue experimentation, preferred embodiments thereof will be described in detail herein below with reference to certain figures, wherein:
FIG. 1 is a block diagram of the high speed serial sampler device of the subject disclosure;
FIG. 2 is a block diagram of the high speed serial sampler of the subject disclosure implemented using an exemplary Virtex-4 FPGA;
FIG. 3 is a graph showing a comparison the signal distribution taken using the method of the subject disclosure relative to known digital signal processing serial sampling methods;
FIG. 4 is a prior art schematic of the receiver domains of the Virtex-4 FPGA; and
FIG. 5 is a prior art example of the operation of the Virtex-4 FPGA digital receiver.

### DESCRIPTION OF PREFERRED EMBODIMENTS

Preferred embodiments of the subject disclosure are described below with reference to the accompanying drawings, in which like reference numerals represent the same or similar elements or features. The subject disclosure relates to target detection, distance measurement and the like by analyzing a received signal reflected from a target. The received signal is read into analog circuitry that converts the analog data into digital data by sampling and using threshold calculations to determine whether or not an event has occurred. An event corresponds to a change in the received signal, in other words, the presence or absence of a target. According to the subject disclosure, a programmable logic circuit is used to sample the received digitized signal and store the values as digital logic units which can be analyzed to determine various desired characteristics. The received (echo) signal is sampled at a time window that corresponds to at least one clock pulse of the logic circuitry device.

According to one embodiment of the subject disclosure, a freely programmable logic circuit such as a field-programmable gate array ("FPGA") is employed as the logic circuit. FPGA devices are available as standard logic circuit modules and typically cost less than other logic programmable logic circuits such as generic array logic devices or complex programmable logic devices. Any suitable FPGA may be adapted for the device and method provided by the subject disclosure. In one embodiment, a Virtex-4 FPGA is used, however any known FPGA may be used.

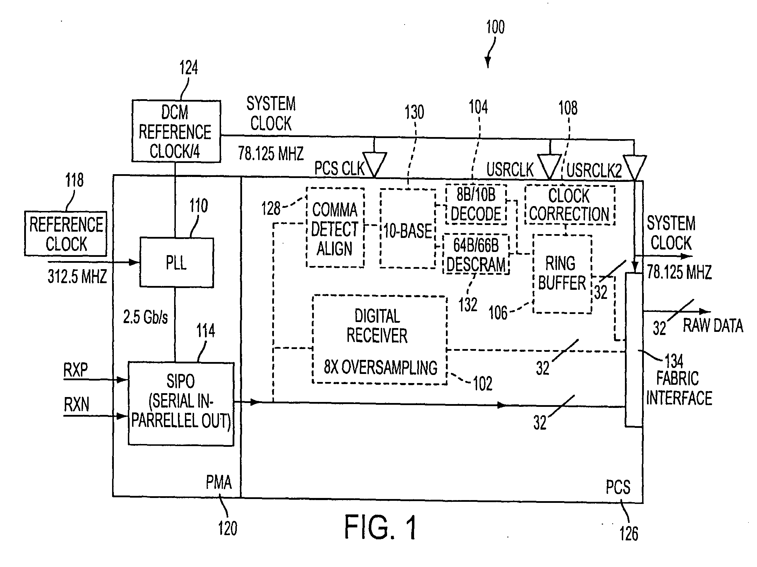

As shown in Fig. 1 according to the present disclosure, the FPGA 100 consists of a number of basic components, namely: a physical coding sublayer (PCS) 126 having a digital receiver 102, a decoder 104, a ring buffer 106, a clock correction module 108, a descrambler module 132, a comma detect align module 128, a 10-base module 130, and a fabric interface 134. The FPGA 100 also consists of a physical medium attachment (PMA) 120 having a digital clock manager (DCM) reference clock 124, a phase locked loop (PLL) 110, a MGT port 112, and a serial in and parallel out port (SIPO) 114. An external reference clock 118 is also supplied.

The receiver 102 embedded in the FPGA 100 is operable with both a locked and an unlocked sampling clock. The FPGA 100 is capable of detecting transition edges in data signal samples generated by the receiver 102 using the unlocked sampling clock and to determine a sampling point from the detected edges for use in recovery of the associated data.

The receiver 102 of the FPGA 100 is operable in two modes, the first mode, the oversampling mode, having a high data rate, and the second mode having a data rate lower than the first mode. The data rate of the second mode may be below a lower bound of a nominal operating data rate range of the receiver 102, while the data rate of the first mode is within the nominal operating data rate range. The receiver 102 operates in the first mode with a locked sampling clock and in the second mode with an unlocked sampling clock. In the normal operations of the FPGA 100, the locked sampling clock may be locked to a recovered transmit clock.

Fig. 5 shows an example of the normal operation of the digital receiver 102 of the FPGA 100. The FPGA 100 is equipped with a digital receiver 102 that oversamples the incoming data for rates at or below 1.25 Gb/s. The upper limit, 1.25 Gb/s is set by two times the voltage controlled oscillator (VCO) frequency of 5 GHz divided by eight (the oversampling rate) - that is 2 X 5 GHz / 8 = 1.25 Gb/s. Although incoming data rates up to 1.25 Gb/s can be received, a common data rate is 0.622 Gb/s. In normal non-oversampled mode, the maximum data rate is limited to 6.5 Gb/s.

As shown in Fig. 5, the FPGA 100 running at 0.622 Gb/s uses the digital receiver 102 and the resulting clocks. A deserializer/SIPO 114 runs eight times faster than the line rate, enabling the oversampler to capture eight samples for a single bit of data. The digital receiver 102 then sends out parallel data synchronized with the clock, a clock one-eighth of the parallel SIPO clock.

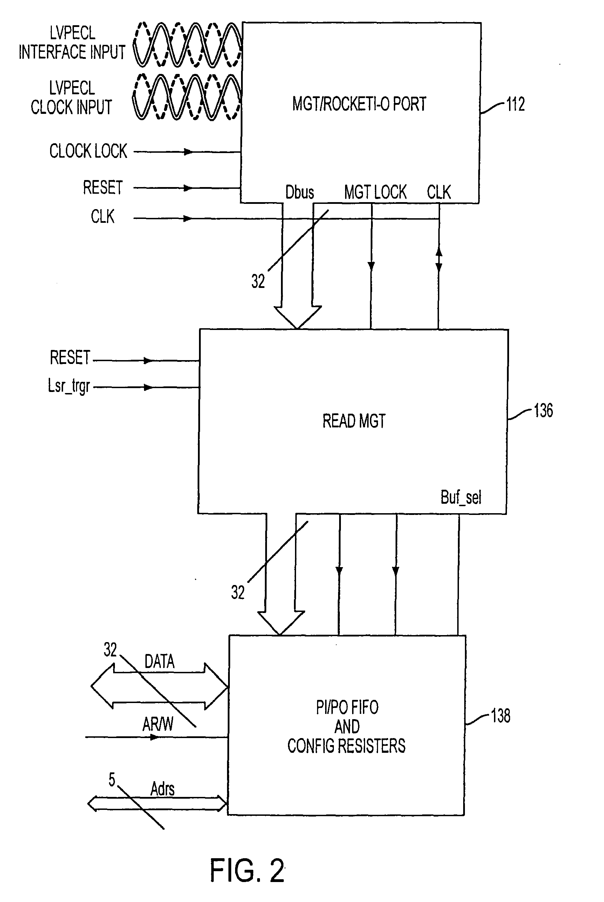

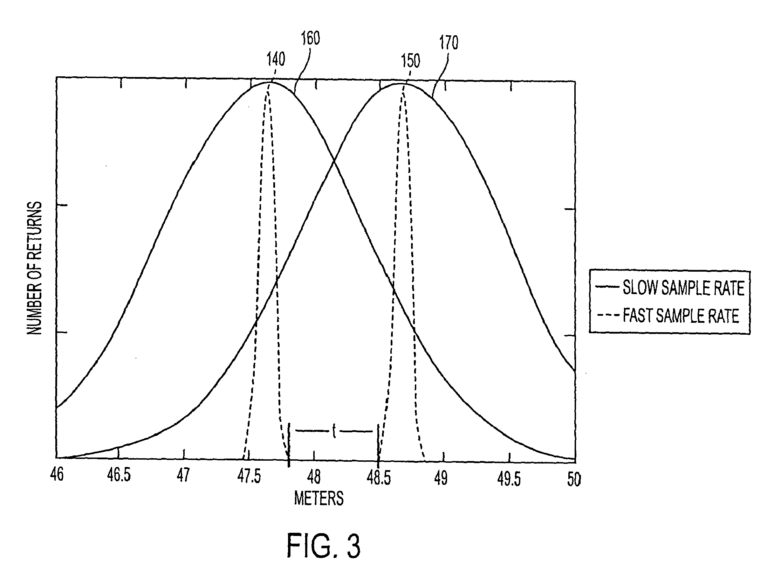

Figs. 1 and 2 show a block diagram of the high speed serial sampler device of the subject disclosure using a Virtex-4 FPGA. In one embodiment, the MGT port 112 is locked to an external clock 118 that is supplied as shown in Fig. 3. The coupling of the MGT port 112 to an external clock increases the rate at which the received signal is sampled, without having to use the device in the oversampling mode. As a result, the data can be sampled and processed at a rate that is independent of the data transfer rate, and allows the FPGA 100 to run at speeds of approximately 6.125 Gb/s. An advantage of sampling faster is that the resolution of an input signal can be brought down to 0.16 ns while other methods may reach no higher than approximately two times the core frequency of the FPGA 100, which may be up to 1.25 ns. In addition, this configuration allows an end user to analyze two received signals closer together in time because the sampling rate is faster.

As shown in Fig. 1, the data comes directly out from the analog front end of the PMA 120 which is comprised of the SIPO 114 and PLL 110 at the rate in which the internal PLLs 110 are set up for sampling the data. This arrangement therefore limits the supplied external clock 118 choices to clocks whose frequencies are multiples of the frequencies that are desired to run so that the clock modules internal to the FPGA 100 can multiply or divide the MGT frequency and the external interface. The bypassing of the internals of the data recovery (CDR) includes setting up of different clock registers and function registers internal to the FPGA 100. These registers include the RXCLK0_FORCE_PMACLK, RXPMACLKSEL, RXRECCLK1_USE_SYNC, RXDATA_SEL, DIGRX_SYNC_MODE, ENABLE_DCDR, and RXCLKMODE, among others.

When the FPGA 100 is run at the maximum frequency for the oversampling mode, over 1.25 GHz, it is designed to derive the internal clock from the incoming data stream, in this case the reflected signal input stream. To gain faster speeds, the MGT port 112 is locked to an external clock 118, which effectively puts the MGT port 112 into oversampling mode. This clock manipulation entails the deriving of the parallel interface clocks of the MGT port 112 from the input blocks. Therefore, another advantage of the subject disclosure is that all clocks are phase aligned and most of the internal MGT hardware designed to operate the MGT port 112 in normal modes can be bypassed. This bypassed hardware as shown in Fig. 1 includes comma detect, alignment 128 ring buffers 106 and internal clock correction 108, for example. By bypassing this hardware, the raw sampled data becomes accessible which yields a much higher resolution of the input signal across the MGT port 112.

Fig. 3 is a graph having a horizontal time axis and a vertical digital signal axis. Fig. 3 shows a comparison of the signal distribution taken using the high speed serial sampling method of the subject disclosure verses digital signal processing serial sampling methods. There are four peaks 140, 150, 160, and 170 in this graph. The two peaks, 140, 150 having dashed lines correspond to high sampling rates which allow a user the capability to look at the received signal data at a time window "t" that is much smaller because of the width of the two peaks 140, 150. The third and fourth peaks 160, 170 having solid lines represent a received signal which has been sampled using an unlocked clock. In peaks 160, 170, an overlap is created because of the oversampling. As a result, more time is needed between reading and processing the data samples, which slows down the time in which an event can be observed and analyzed.

Although the subject invention has been described with respect to preferred embodiments, those skilled in the art will readily appreciate that changes or modifications thereto may be made without departing from the spirit or scope of the subject invention as defined by the appended claims.

## Claims

1. A high speed serial sampler device for detecting a location of a target comprising:
a) a transmitter for transmitting a signal; and
b) a programmable logic circuit having a receiver for detecting a received echo reflected from at least one target, wherein the programmable logic circuit samples the received echo based on an external clock to create a sampled echo, and wherein a transition in the sampled received echo indicates a location of a target.

2. The device of claim 1, wherein that the programmable logic circuit comprises a field-programmable gate array.

3. The device of claim 2, wherein the field-programmable gate array further comprises a Multigigabit Transfer port that is locked to the external clock.

4. The device of claim 1, wherein the signal is a radio frequency signal, or
wherein the signal is an optical signal.

5. The device of claim 1, wherein the programmable logic circuit determines a distance of the target from the transmitter based on the transition in the sampled echo, or
wherein the programmable logic circuit uses a pulse width of the received echo to determine a strength and noise of the received echo, or
wherein the programmable logic device uses a start pulse of the received echo to determine a distance of the target from the transmitter.

6. The device of claim 1, wherein a resolution of the received echo is less than or equal to 0.16 ns.

7. A device for detecting the location of a target during surveillance comprising:
a) a transmitter for broadcasting a signal for requesting information about a location of a target;
b) a programmable logic circuit having:
i) a receiver for detecting an echo signal reflected from the target; and
ii) a sampler for oversampling the echo signal at a rate based on an external clock; and
c) a decoder for receiving an oversampled signal from the sampler, decoding the oversampled signal, and outputting a low signal if a target is not detected and a high signal if the target is detected.

8. The device of claim 7, wherein the programmable logic circuit comprises a field-programmable gate array.

9. The device of claim 8, wherein the field-programmable gate array further comprises a Multigigabit Transfer port that is locked to the external clock.

10. The device of claim 107 wherein a distance of the target from the transmitter is determined by the transition of the low signal to the high signal outputted by the decoder.

11. The device of claim 7, wherein a resolution of an echo signal is less than or equal to 0.16 ns.

12. A method for detecting a target, the steps comprising:
a) transmitting a signal at the target;
b) detecting a received signal reflected from the target;
c) sampling the received signal with an field-programmable gate array based on an external clock; and
d) detecting a target by determining a transition in the sampled received signal.

13. The method of claim 12, wherein the received signal is detected by a field-programmable gate array.

14. The method of claim 13, further comprising the step of: coupling a Multigigabit Transfer port of the field-programmable gate array to said external clock.

15. The method of claim 14, further comprising the step of: bypassing at least a portion of hardware used to operate the field-programmable gate array in a normal mode.

16. The method of claim 12, further comprising the step of: determining a distance of the target from the transmitter based on a start pulse of the sampled received signal.
